Europäisches Patentamt

European Patent Office

Office européen des brevets

(11) Veröffentlichungsnummer: **0 212 224 B1**

# EUROPÄISCHE PATENTSCHRIFT

(45) Veröffentlichungstag der Patentschrift: 04.09.91

(51) Int. Cl.⁵: **B29C 45/52**

(21) Anmeldenummer: 86109537.0

(22) Anmeldetag: 11.07.86

(54) **Rückstromsperre für eine Spritzeinheit für Spritzgiessmaschinen.**

(30) Priorität: 19.07.85 AT 2147/85

(43) Veröffentlichungstag der Anmeldung:
04.03.87 Patentblatt 87/10

(45) Bekanntmachung des Hinweises auf die
Patenterteilung:
04.09.91 Patentblatt 91/36

(84) Benannte Vertragsstaaten:
BE CH DE FR GB IT LI NL SE

(56) Entgegenhaltungen:
DE-A- 2 942 320
GB-A- 2 050 929
US-A- 3 438 393
US-A- 4 105 147

(73) Patentinhaber: Engel Maschinenbau Gesellschaft m.b.H.

A-4311 Schwertberg(AT)

(72) Erfinder: Wögerer, Alfred
Bachstrasse 25
A-4311 Schwertberg(AT)

(74) Vertreter: Hofinger, Engelbert et al
Torggler-Hofinger Wilhelm-Greil-Strasse 16
A-6020 Innsbruck(AT)

**Beschreibung**

Die Erfindung bezieht sich auf eine Rückstromsperre für eine Spritzeinheit einer Spritzgießmaschine, mit einem Schneckenzylinder mit Plastifizierschnecke, bei deren Spitze ein Sperrkörper mit einer Dichtfläche und eine Sperrhülse mit einer korrespondierenden Dichtfläche angeordnet ist, die mit einer Andrückfläche an einem als Radialarm ausgebildeten Mitnehmer anliegt.

Bei der Verarbeitung von Kunststoffmassen, beispielsweise thermoplastischer Massen in Schneckenpressen, stellt die Plastifizierschnecke ein wichtiges Maschinenelement dar. Bei herkömmlichen Spritzeinheiten wird das Spritzmaterial vom Einlaß durch die Schnecke über die drei Schneckenfunktionszonen, d. h. von der Einzugszone über die Umwandlungszone, und schließlich die Meteringzone nach vorne an die Spritzdüse gefördert, während sie gleichzeitig die Schnecke entgegen einem voreingestellten Rückstaudruck zurückbewegt. Beim eigentlichen Einspritzvorgang wird die Schnecke von einem Hydraulikzylinder kolbenartig nach vorne gestoßen. Für einen einwandfreien Spritzgießvorgang ist es wichtig, daß ein Rückströmen eines Teiles der Kunststoffmasse verhindert wird.

Es ist daher eine Rückstromsperre eingebaut. Die bisher üblichen Rückstromsperren arbeiten derart, daß durch die Schubbewegung der Plastifizierschnecke beim Einspritzvorgang und durch das Trägheitsmoment der Sperrhülse die Dichtflächen von Sperrkörper und Sperrhülse aufeinandertreffen. Diese verhindern, einem geschlossenen Kegelventil gleich, den Massenrückstrom beim Einspritzvorgang in Richtung Schnecke.

Eine derartige Rückstromsperre ist beispielsweise aus der DE-OS 29 46 683 bekannt. Die DE-OS 32 03 724 zeigt eine Rückstromsperre, bei der ein radialer Bolzen an der Schneckenspitze einen Dosierkörper mitnimmt.

Die US-PS 41 05 147 zeigt einen Einspritzzylinder mit einer Schnecke und einem von zwei Ringen gebildeten Ventil. Einer der Ringe ist fix mit der Schnecke verbunden, während der zweite Ring, der das eigentliche Schließorgan bildet, lose auf der Spitze der Schnecke gelagert ist. Dieser Ring weist axiale Vorsprünge auf, die in Kerben des anderen Ringes einrasten und die Nuten, durch die der Durchfluß des plastifizierten Materiales erfolgt, sperren. Das Sperren des Ventiles erfolgt durch die Einspritzbewegung der Schnecke.

Den bisherigen Rückstromsperren haftet der Fehler an, daß das Trägheitsmoment der Sperrhülse nicht immer gleich groß ist, d. h. das Trägheitsmoment ändert sich mit der Einspritzgeschwindigkeit, mit dem Einsatz verschiedener Materialien und der Materialtemperatur mit den damit verbundenen Viskositätsänderungen. Auch Maßunterschiede zwischen dem Außendurchmesser der Sperrhülse und dem Zylinderinnendurchmesser des Einspritzzylinders wirken sich stark auf das Trägheitsmoment der Sperrhülse und somit auf das Schließmoment aus.

Durch die unterschiedlichen Schließmomente treten Fehler beim Einspritz- und Füllvorgang auf. Die Fehler sind manchmal so groß, daß dadurch in der Produktion eine erhöhte Ausschußquote besteht. Im besonderen kann es bei einem langsamen Einspritzvorgang eine Streuung von ca. 2 bis 5 mm im Schließmoment der Rückstromsperre geben. Das heißt, daß die Rückstromsperre einmal nach 2 mm und einmal erst nach 5 mm Schneckenhub schließt.

Ein weiterer Nachteil bekannter Rückstromsperren ist, daß es zu einer starken Abnützung zwischen der Sperrhülse und dem Sperrkörper kommt. Dies ist besonders dann der Fall, wenn, um das Schließmoment zu verbessern, der Spalt zwischen der Sperrhülse und der Zylinderwand des Einspritzzylinders klein gehalten wird. Dadurch wird ein Mitdrehen der Sperrhülse mit der Plastifizierschnecke weitgehend verhindert und es kommt zu einem erhöhten Verschleiß zwischen dem Sperrkörper und der Sperrhülse.

Aufgabe der Erfindung ist es, eine Spritzeinheit der eingangs erwähnten Art dahingehend zu verbessern, daß eine absolut sichere Funktion der Rückstromsperre erzielt wird, und zwar weitgehend unabhängig von der Viskosität des Kunststoffmaterials. Eine weitere Aufgabe der Erfindung ist es, die Verschleißerscheinungen bei der Sperrhülse herabzusetzen.

Die erfindungsgemäße Aufgabe wird dadurch gelöst, daß die Andrückfläche eine Kurvenfläche ist, die eine Kurvenlinie in der Seitenansicht der Sperrhülse beschreibt, derart, daß der Mitnehmer beim Drehen die Sperrhülse mit ihrer Dichtfläche auf die Dichtfläche des Sperrkörpers drückt.

Die Sperrhülse wird vom Mitnehmer, der beispielsweise ein Zapfen ist, mitgenommen, wobei die Kurvenlinie praktisch als Kulissensteuerung wirkt. Einerseits wird die Sperrhülse mit der Plastifizierschnecke gedreht und andererseits auf die Dichtfläche des Sperrkörpers gedrückt, wodurch die Rückstromsperre geschlossen wird.

Wenn die Plastifizierschnecke nicht unter Druck vorwärtsgetrieben wird, ist die Sperrhülse zwischen der Dichtfläche des Sperrkörpers und dem Mitnehmer frei beweglich.

Ein Ausführungsbeispiel der Erfindung sieht vor, daß an einem Ende der Andrückfläche eine Nocke vorgesehen ist.

Ein weiteres Ausführungsbeispiel sieht vor, daß die Andrückfläche eine Ausnehmung in der Sperrhülse begrenzt. Die Ausnehmung kann beispielsweise von einem Loch in der Hülsenwand der Sperrhülse gebildet werden.

Nachfolgend werden verschiedene Ausführungsbeispiele der Erfindung anhand der Figuren der beiliegenden Zeichnung eingehend beschrieben, ohne daß die Erfindung darauf eingeschränkt sein soll. Ebenso sollen die in den nachfolgenden Patentansprüchen angeführten Bezugszeichen keine Einschränkung bedeuten, sie dienen lediglich dem erleichterten Auffinden bezogener Teile in den Figuren der Zeichnung.

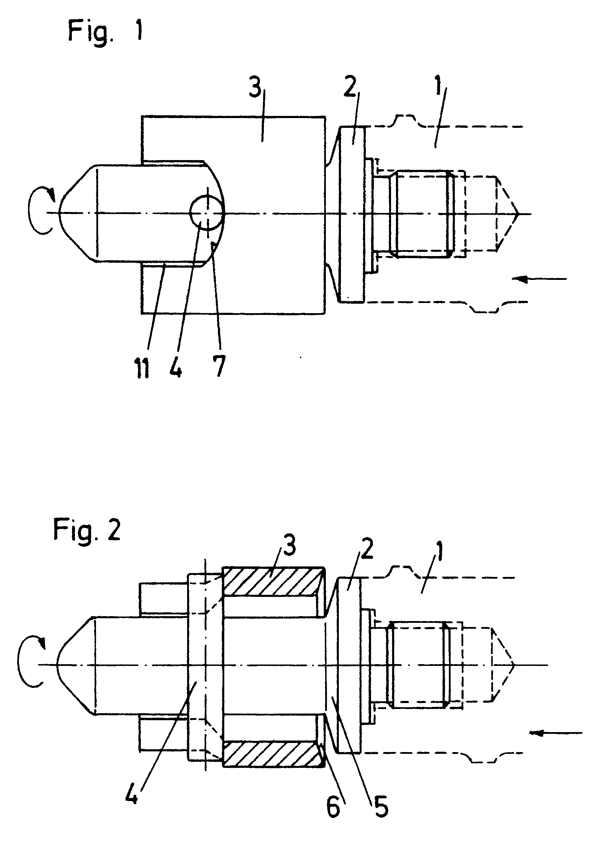

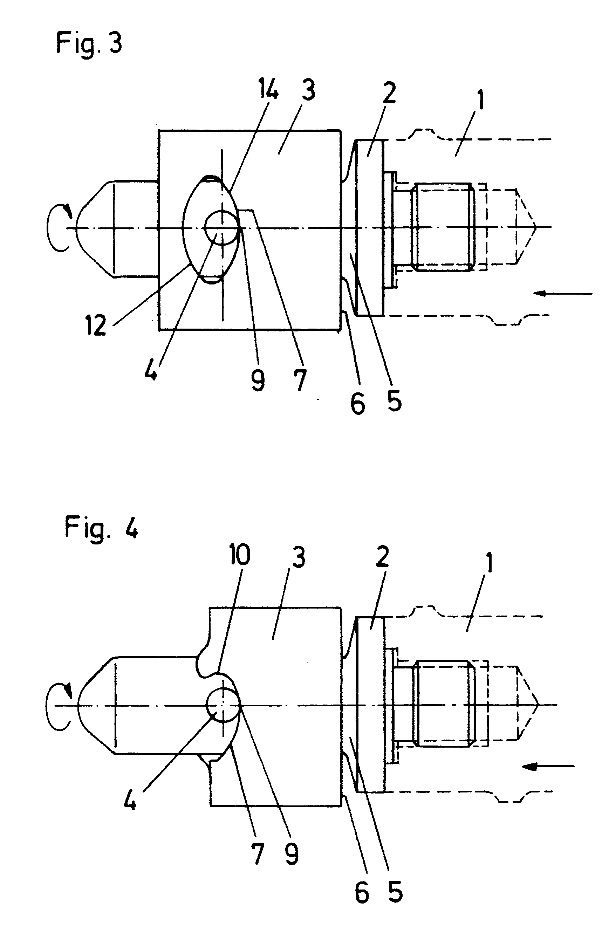

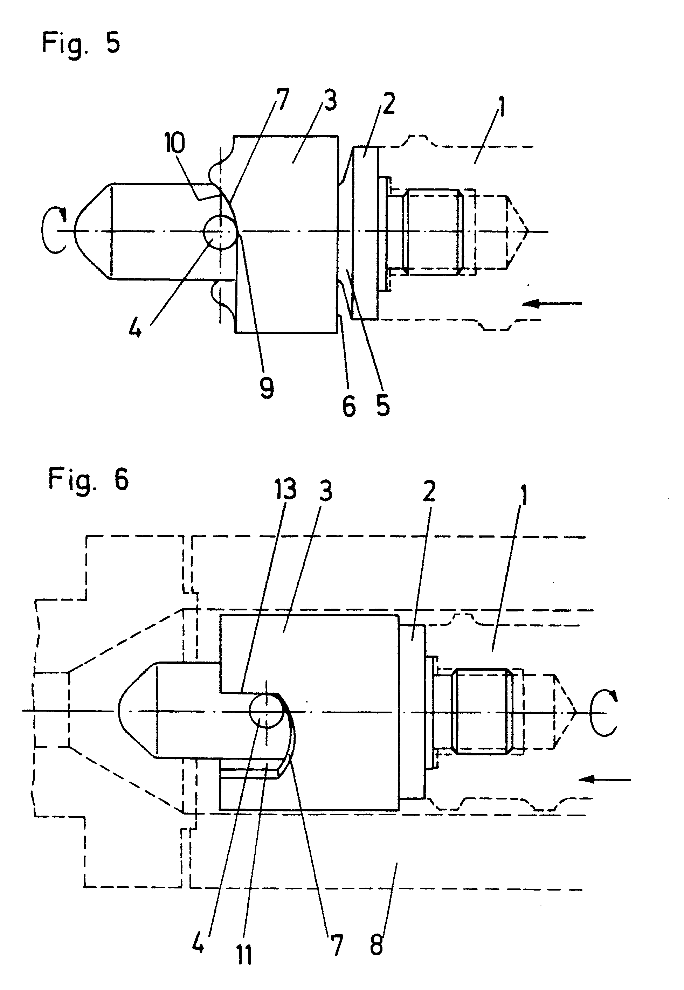

Die Fig. 1 zeigt eine schematisch gehaltene Seitenansicht einer erfindungsgemäßen Plastifizierschnecke mit Sperrhülse und Sperrkörper, die Fig. 2 zeigt dieselben Teile um 90° verdreht und im Schnitt, die Fig. 3 bis 5 zeigen analoge Ansichten zur Fig. 1, wobei verschiedene Ausführungen der Sperrhülse und der Andrückfläche gezeigt sind, und die Fig. 6 zeigt eine schematische Ansicht der Plastifizierschnecke im Spritzzylinder bei geschlossener Rückstromsperre.

In den Fig. der Zeichnungen wurden nur die erfindungswesentlichen Teile der Spritzeinheit, die die Rückstromsperre betreffen, gezeigt. Die anderen Teile der Spritzeinheit wurden der besseren Verständlichkeit halber weggelassen.

Die erfindungsgemäße Spritzeinheit weist eine Plastifizierschnecke 1 auf, die in bekannter Weise in einem Spritzzylinder 8 bewegbar ist, und zwar übt die Plastifizierschnecke 1 einerseits eine Drehbewegung und andererseits eine axiale Vorstoßbewegung aus.

Am vorderen Ende der Plastifizierschnecke 1 ist der Sperrkörper 2 und die Sperrhülse 3 angeordnet. Der Sperrkörper 2 ist fest mit der Plastifizierschnecke 1 verbunden. Die Sperrhülse 3 ist in einem gewissen Bereich auf der Plastifizierschnecke 1 frei bewegbar. Die Bewegbarkeit der Sperrhülse 3 wird durch den von einem Zapfen 4 gebildeten Mitnehmer begrenzt.

Der Sperrkörper 2 weist eine Dichtfläche 5 und die Sperrhülse 3 eine Dichtfläche 6 auf, die in der Schließstellung aneinanderliegen.

An der Sperrhülse 3 ist eine Andrückfläche 7 für den Zapfen 4 ausgebildet. Die Andrückfläche 7 ist, wie aus den Fig. der Zeichnungen ersichtlich, in der Seitenansicht der Sperrhülse 3 eine Kurvenlinie und bewirkt eine Kulissensteuerung der Sperrhülse 3 durch den Zapfen 4.

In den Ausführungsbeispielen der Fig. 4 und 5 ist am Ende der Andrückfläche 7 jeweils eine Nokke 10 angeordnet. Diese Nocken 10 bilden einen endgültigen Anschlag für den Zapfen 4 und bewirken das Schließen der Sperrhülse 3.

In den Ausführungsbeispielen der Fig. 1, 3 und 6 wird die Andrückfläche 7 von einer Ausnehmung 11, 12 in der Sperrhülse 3 definiert. Der Anschlagrand 13 der Ausnehmung 11 entspricht funktionsmäßig der Nocke 10.

Die Ausnehmung 12 ist eine Durchbrechung in der Hülsenwand der Sperrhülse 3. Die obere Kante 14 der Durchbrechung bildet den Anschlag für den Zapfen 4 und entspricht funktionsmäßig der Nocke 10.

Die Rückstromsperre bei der erfindungsgemäßen Spritzeinheit erfolgt folgendermaßen:

Bei der Drehung der Plastifizierschnecke 1 wird die Sperrhülse 3 durch den Massestrom gegen den Haltestift 4 gedrückt, wobei der Zapfen 4 entsprechend der Massestrom- und Drehgeschwindigkeit mehr oder weniger in das Kulissental 9 gedrückt wird.

Nähert sich die Massenstrom- oder Drehgeschwindigkeit dem Ende, drückt der Zapfen 4 entsprechend der Andrückfläche 7 kurz vor dem Stillstand der Plastifizierschnecke 1 die Sperrhülse 3 durch den Kulissenberg, der von der Nocke 10 der Kante 13 oder der Ecke 14 gebildet wird, gegen die Dichtfläche 5 am Sperrkörper 2. Somit ist die Rückstromsperre geschlossen, bevor die Plastifizierschnecke 1 den Einspritzvorgang einleitet.

Durch die Zwangsführung zwischen Zapfen 4 und der Andrückfläche 7 werden Unterschiede im Schließmoment beim Einspritzvorgang an der Rückstromsperre ausgeschlossen.

## Patentansprüche

1. Rückstromsperre für eine Spritzeinheit einer Spritzgießmaschine, mit einem Schneckenzylinder mit Plastifizierschnecke, bei deren Spitze ein Sperrkörper mit einer Dichtfläche und eine Sperrhülse mit einer korrespondierenden Dichtfläche angeordnet ist, die mit einer Andrückfläche an einem als Radialarm ausgebildeten Mitnehmer anliegt, dadurch gekennzeichnet, daß die Andrückfläche (7) eine Kurvenfläche ist, die eine Kurvenlinie in der Seitenansicht der Sperrhülse (3) beschreibt, derart daß der Mitnehmer beim Drehen die Sperrhülse (3) mit ihrer Dichtfläche (6) auf die Dichtfläche (5) des Sperrkörpers (2) drückt.

2. Spritzeinheit nach Anspruch 1, dadurch gekennzeichnet, daß an einem Ende der Andrückfläche (7) eine Nocke (10) vorgesehen ist.

3. Spritzeinheit nach Anspruch 1, dadurch gekennzeichnet, daß die Andrückfläche (7) eine Ausnehmung (12, 13) in der Sperrhülse (3) begrenzt.

4. Spritzeinheit nach Anspruch 3, dadurch gekennzeichnet, daß die Ausnehmung (12) ein Loch in der Hülsenwand der Sperrhülse (3) ist.

5. Spritzeinheit nach Anspruch 1, dadurch gekennzeichnet, daß der Mitnehmer ein Zapfen (4) ist.

## Claims

1. A back flow blocking arrangement for an injection unit of an injection moulding machine having a screw cylinder with plasticising screw, at the tip of which is arranged a blocking body with a sealing surface and a blocking sleeve with a corresponding sealing surface, which bears with a contact surface against an entrainment member in the form of a radial arm, characterised in that the contact surface (7) is a curved surface which describes a curved line in the side view of the blocking sleeve (3), such that in the rotary movement the entrainment member presses the blocking sleeve (3) with its sealing surface (6) against the sealing surface (5) of the blocking body (2).

2. An injection unit according to claim 1 characterised in that a dog (10) is provided at an end of the contact surface (7).

3. An injection unit according to claim 1 characterised in that the contact surface (7) defines an opening (12, 13) in the blocking sleeve (3).

4. An injection unit according to claim 3 characterised in that the opening (12) is a hole in the wall of the blocking sleeve (3).

5. An injection unit according to claim 1 characterised in that the entrainment member is a pin (4).

## Revendications

1. Clapet antiretour pour un dispositif d'injection d'une machine de moulage par injection, comportant un cylindre à vis sans fin pourvu d'une vis sans fin de plastification et au bout duquel sont disposés un corps obturateur pourvu d'une surface d'étanchéité et un fourreau obturateur pourvu d'une surface d'étanchéité correspondante et qui s'applique par une surface de poussée contre un organe d'entraînement agencé sous la forme d'un bras radial, caractérisé en ce que la surface de poussée (7) est une surface incurvée, qui décrit, dans la vue en élévation latérale du fourreau obturateur (3), une ligne incurvée de telle sorte que l'organe d'entraînement, lors de sa rotation, applique le fourreau obturateur (3) par sa surface d'étanchéité (6) contre la surface d'étanchéité (5) du corps obturateur (2).

2. Dispositif d'injection selon la revendication 1, caractérisé en ce qu'il est prévu une came (10) à une extrémité de la surface de poussée (7).

3. Dispositif d'injection selon la revendication 1, caractérisé en ce que la surface de poussée (7) délimite un évidement (12, 13) dans le fourreau obturateur (3).

4. Dispositif d'injection selon la revendication 3, caractérisé en ce que l'évidement (12) est un trou formé dans la paroi du fourreau obturateur (3).

5. Dispositif d'injection selon la revendication 1, caractérisé en ce que l'entraîneur est une broche (4).

Fig. 1

Fig. 2

Fig. 3

Fig. 4

Fig. 5

Fig. 6